# EUROPEAN PATENT APPLICATION

(11) **EP 4 704 067 A1**
(43) Date of publication of application: **04.03.2026**
(21) Application number: 24197159.7
(22) Date of filing: 29.08.2024
(51) Int. Cl.: G09B 7/00, G09B 7/02

(54) **A METHOD FOR PROVIDING A TRAINING SIMULATION FOR A PERSON VIA ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(71) Applicant: Siemens Aktiengesellschaft, 80333 München (DE)
(72) Inventor: Votintseva, Anjelika, 81735 München (DE)
(74) Representative: Siemens Patent Attorneys

(57) **Abstract**

The invention relates to a method for providing a training simulation (1) for a person (14) by an electronic computing device (10), comprising the steps of identifying the person (14) by an identification device (16, 28) of the electronic computing device (10), selecting a task (30) to be solved by the person (14) out of a plurality of stored tasks (30) depending on the identified person (14) by the electronic computing device (10), receiving an input from the person (14) for solving the task by an input device (18, 20, 22, 28) of the electronic computing device (10), analyzing the received input depending on the selected task (30) by the electronic computing device (10), generating a score value (38) for the person (14) depending on the analyzation by the electronic computing device (10), and storing the score value (38) linked to the identified person (14) in a storing device (26) of the electronic computing device (10). Furthermore, the present invention relates to a computer program product, a computer-readable storage medium, as well as to an electronic computing device (10).

## Description

A method for providing a training simulation for a person via electronic computing device, a computer program product, a computer-readable storage medium, as well as an electronic computing device

The present invention relates to a method for providing a training simulation for a person by an electronic computing device according to the pending claim 1. Furthermore, the present invention relates to a corresponding computer program product, a corresponding computer-readable storage medium as well as to a corresponding electronic computing device.

Negotiation expertise is crucial in many professions. It comprises different skills, all are necessary to master negotiation to a professional level: emotional intelligence, strategic thinking, knowledge for different tactics, recognition of manipulation and lies, capability to read faces and body language of the counterparts, recognition of the status and others. The success of a negotiation lies in the continuous and numerous exercising in all these soft skills. On the other hand, exercising means access to negotiation counterparts, which can be challenging for newcomers, young professional and any other people who wants to improve their soft skills. In addition, exercising can get students in embarrassing situations, as they might be not skilled enough. Another challenge for newcomers and less skilled persons while exercising with real persons in simulated negotiations is that they need to take into account so many aspects at the same time.

Soft skills, also known as interpersonal or social skills, are personal qualities, behaviors and abilities that a person needs to effectively communicate, collaborate, and build relationships with others. Unlike hard skills, such as technical or job specific skills, soft skills are not easily defined or measured, but are equally important for professional and personal success. Training programs for soft skills can help improve communication skills, teamwork, leadership abilities, conflict resolution skills, creativity, time management, empathy, and more. Such training can be offered in form of workshops, seminars, coaching, online courses, or personal development.

During a soft skill training program, various methods are used, such as role plays, group discussions, case studies, feedback sessions, and reflection exercises. These methods enable participants to practice and improve their skills in realistic situations and receive immediate feedback from trainers and other participants.

Soft skills trainings can be offered for individuals, teams, or organizations. For businesses, targeted soft skills trainings can help increase productivity, motivation, and job satisfaction, reduce conflicts, and foster a positive work culture.

It is important to note that soft skills cannot be acquired in a single training session, but rather are a continuous learning process that is fostered through experience, feedback, and reflection. A good soft skill training program should therefore be tailored to individual needs and goals of participants and have sustainable impact.

There are several computer programs and online platforms known that can help individuals develop and improve their soft skills. These programs often use interactive elements, such as simulations, quizzes and games to engage users and provide a hand-on learning experience.

In particular, training material for soft skill trainings is of limited availability. The skill of active listening is useful in daily negotiation and conversion, for example, in sales, service and management but involves self-control and restraint.

Therefore, there is a need in the art to provide a soft skill training program in order to train in a frequent manner for developing the soft skills.

It is an object of the present invention to provide a method, a corresponding computer program product, a corresponding computer-readable storage medium, as well as an electronic computing device, by which a training for a person can be provided in an improved manner.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for providing a training simulation for a person by an electronic computing device. The person is identified by an identification device of the electronic computing device. A task to be solved by the person is selected out of a plurality of stored tasks depending on the identified person by the electronic computing device. An input from the person for solving the task is received by an input device of the electronic computing device. The received input is analyzed depending on the selected task by the electronic computing device. A score value for the person is generated depending on the analyzation by the electronic computing device, and the score value is stored linked to the identified person in a storing device of the electronic computing device.

Therefore, skills can be trained for the person, in particular in small steps, each dedicated to only for one aspect of a negotiation to make it easy to concentrate on and train this special skill individually until it becomes automatic. For this, a gamification method is applied, which is proposed as, for example, a so-called digital game that can be used in any suitable daytime by any person without getting embarrassed but stay motivated while sharing achievements in form of scores.

Therefore, in particular, the tasks to be solved may cover all aspects of negotiations. Each task to be solved spans only one small aspect to focus on. Different negotiation simulations, in particular real-life or virtual, and gamification methods are provided. For example, the score calculation may be a numeric value to measure progress in a consecutive very visible and easy way that can be used within, for example, leader boards. Furthermore, monetization can be provided for more student motivation to stay in the training and for the possibility to monitor the ROI (Return of Investment) and similar KPI (Key Performance Indicators) for companies applying to the approach to train their employees. Multiple dimensions for "leveling-up" for more motivation and easy upskilling is provided, these dimensions are also involved to raise the diversity within each task that allow to train one skill by one task in different ways/scenarios. Anonymization to cover uncertainties to train situations closer to the real life is provided, and to make the diversity within the task near to endless. Furthermore, a customization, and extendibility by the person to improve the persons experience allowing the person to define their own situations is provided. Attraction features that help to hold the user solving the tasks and mastering the skills are provided.

The target of the tasks are training practical soft skills. Therefore, for example, two different levels of scores are provided, in particular a performance and an empathy score with the possibility to extend it to even higher score types. Furthermore, two different types for monetization can be used, for example, a public usage with real currency or company internal usage with virtual budget and KPI calculation making these games attractive for businesses. Different dimensions for living up and diversity within individual small and simple tasks is provided. The tasks/games may be extendable with user specific emotion definition which can be very useful, in particular to cover cultural differences in negotiation styles.

In particular, different negotiation areas to train are provided. For example, an emotional intelligence which comprises emotional awareness, emotion control and building empathy, in particular with the emotion recognition from the counterpart is provided. Furthermore, negotiation tactics can be trained. Furthermore, applying tactics according to situations or the counterpart style are provided. Technic recognition and psychological background behind the tactics may be trained. Another area may be negotiation style, in particular, the style awareness, for example, applying it accordingly or the style recognition may be trained. Also active listening may be trained, in particular with a counterpart mirroring the body language recognition. Also conflict dealing can be trained, for example, by an early conflict recognition, the conflict resolution as well as collaboration. Furthermore, problem solving as well as the best alternative to a negotiated agreement (BATNA) may be provided for training. Furthermore, the no-return recognition may be provided.

Therefore, the electronic computing device provides a so called serious game. A serious game is a type of game designed with a specific purpose beyond just entertainment. While traditional games are primarily created for enjoyment and recreation, serious games aim to educate, train, or achieve other specific goals related to education, business, health, or social impact. Serious games can take many forms, including video games, board games, card games, and role-playing simulations. They often incorporate elements of storytelling, problem-solving, and interaction to engage players and help them learn new skills or knowledge. Serious games are used in a variety of settings, such as schools, businesses, healthcare facilities, and government agencies, to achieve goals such as: Educating students on complex subjects; Training employees on job-related skills; Simulating real-world scenarios for emergency response training; Helping patients recover from illness or injury; Raising awareness of social issues. Serious games are becoming increasingly popular as a way to make learning and training more engaging, interactive, and effective. By combining the power of play with specific goals and objectives, serious games can help individuals and organizations achieve their goals in new and innovative ways.

According to another embodiment, the score value is presented for the person by an output device of the electronic computing device. For example, the output device may be a display device or a speaker device. Therefore, the score can be provided for the person. Therefore, the person may get the information about how he has solved the task. Therefore, the person may perceive in an easy way how he has solved the task.

According to another embodiment, the person is identified by a card reader as the identifying device and/or by a camera as the identifying device. For example, the user may provide a business card, and may use it for identification or training. Alternatively or additionally, a camera can be used to identify the person via the camera. Also by using a finger print of the person the person may be identified. It is also possible that, for example, more than one person can train and "game" with each other, in particular by identifying themselves via the card reader and therefore may train together and/or against each other in order to train their soft skills.

In another embodiment, additionally depending on a stored score value of the identified person the task to be solved is selected. For example, the person has "leveled up" in the last task. Therefore, the next task may be more complex or another training of another skill, and therefore, the scored score may be used in order to select, for example, a more complex task to be solved. Therefore, the person can progress in training the soft skills.

In another embodiment, the task to be selected is a task for training soft skills of the person. skills, also known as interpersonal or social skills, are personal qualities, behaviors and abilities that a person needs to effectively communicate, collaborate, and build relationships with others. Unlike hard skills, such as technical or job specific skills, soft skills are not easily defined or measured, but are equally important for professional and personal success. Training programs for soft skills can help improve communication skills, teamwork, leadership abilities, conflict resolution skills, creativity, time management, empathy, and more. Such training can be offered in form of workshops, seminars, coaching, online courses, or personal development. Therefore a training for developing soft skills can be provided.

In another embodiment the higher the stored score is the more complex the task for training the soft skill is selected. Therefore, the person may get a progress, and therefore more complex tasks to be solved are selected. This means that depending on the current progress of the user, the task can be selected. Therefore, it is important to correctly identify the person in order to guarantee the correct selection of the task to be solved. Therefore, the person can progress in training the soft skills.

In another embodiment depending on the stored score of the person a background distraction during the training simulation is adapted. For example, traffic noise or ringing noise of a telephone or conversation noise or also optic distraction can be put inside the training as the background distraction. Therefore, it is harder for the person to train the soft skills. Therefore, progress for training the soft skills is provided.

According to another embodiment, the training for a soft skill is divided in a plurality of sub tasks, wherein a sub task is the task to be solved. Therefore, according to the approach, all necessary skills are separated into the small steps/sub tasks, each dedicated to only one aspect for negotiation to make easy to concentrate and to train this special skill individually until it becomes "automatic" for the person.

In another embodiment, the electronic computing device comprises an artificial intelligence for at least analyzing the received input. Therefore, the input of the person can be analyzed in an improved manner.

In another embodiment, at least the analyzation is provided by a large language model. Furthermore, the "conversation" between the electronic computing device and the person can be provided with a large language model. A large language model, which may also be called language model, is in particular be referred to the context of natural language processing (NLP) and artificial intelligence (Al). A large language model is a type of artificial intelligence model that is trained on large amounts of text data to understand patterns, structures, and meaning in human language. A large language model typically refers to a model that has been trained on an extremely large dataset, often consisting of billions or even trillions of words. These models are capable of generating human-like texts, translating languages, summarizing documents, answering questions, and performing other language-related tasks with high accuracy and fluency. Large language models have many potential applications in areas such as a customer service, content creation, education and research. However, they also raise ethical, and society consensus related to bias, misinformation, and job displacement. As such, a large language model is an important approach to develop deployment of large language models with care under consideration of their potential impacts on individuals and society as a whole. Therefore, a large language model is used to train the systematic questioning techniques of the person.

In another embodiment, the large language model is trained for role playing with persons. Role playing is a common technique used in language learning to simulate real-life conversations and scenarios. Role playing allows learners to practice speaking, listening and interacting with others in a safe and controlled environment. In the context of LLMs, role playing can be used to create interactive and immersive language learning experiences. For example, a large language model could generate personalized role-playing scenarios based on the learner's proficiency level, interests and goals. The person can then interact with the virtual character or Al-power chat board in real-time, practicing language skills and receiving feedback on the performance.

Role-playing can help develop various soft skills that are essential for effective communication and relationship building. For simulating real-life conversations and scenarios, role-playing can help learners practice active listening, empathy, problem-solving, creativity, and adaptability. It can also help built cultural awareness and sensitivity, as learners are exposed to different perspective and world views through the virtual characters they interact with.

In another embodiment, the electronic computing device comprises a capturing device, wherein a gesture and/or a mimic of the person is captured and analyzed for solving the task. In particular, in soft skills, also the mimic and/or gesture is an important part for negotiations. Therefore, the gesture and/or mimic of the person can be captured and analyzed in order to determine how the person acts during the negotiation. Therefore, a very detailed analyzation of negotiation skills of the person can be provided.

In particular, the method is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the present invention relates to an electronic computing device for providing a training simulation for a person, comprising at least one identification device and one input device, and one storing device, wherein the electronic computing device is configured for performing a method according to the preceding aspect. In particular, the method is performed by the electronic computing device.

Advantageous embodiments of the method are to be regarded as advantageous embodiments of the computer program product, the computer-readable storage medium, as well as the electronic computing device. The electronic computing device therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

The electronic computing device may in particular use the technique of NLP. NLP may use different technical methods for providing its service: Tokenization: This is the process of breaking down text into individual words or tokens. Tokenization is a fundamental step in NLP, as it allows us to analyze and manipulate text at the word level; Part-of-Speech Tagging: This is the process of labeling each word in a sentence with its corresponding part of speech (e.g., noun, verb, adjective, etc.). Part-of-speech tagging helps us understand the syntactic structure of a sentence and is often used as an intermediate step in more complex NLP tasks; Parsing: This is the process of analyzing the grammatical structure of a sentence to identify its subject, verb, object, and other grammatical relationships. Parsing is used to extract meaning from text and is often used in applications such as machine translation and sentiment analysis; Named Entity Recognition (NER): This is the process of identifying and categorizing named entities (e.g., people, organizations, locations) in text. NER is used in a variety of applications, including information extraction, question answering, and search. Sentiment Analysis: This is the process of analyzing text to determine its overall sentiment or emotion. Sentiment analysis is used in applications such as social media monitoring, customer feedback analysis, and brand reputation management. Machine Translation: This is the process of automatically translating text from one language to another. Machine translation uses techniques such as statistical machine learning and neural machine translation to generate translations that are increasingly accurate and idiomatic. Text Classification: This is the process of categorizing text into predefined categories based on its content. Text classification is used in applications such as spam filtering, topic modeling, and sentiment analysis. Information Extraction: This is the process of extracting structured information from unstructured text. Information extraction involves techniques such as named entity recognition, part-of-speech tagging, and parsing to identify and extract relevant information from text. Chatbots and Virtual Assistants: These are Al systems that use NLP to interact with users in natural language. Chatbots and virtual assistants are used in applications such as customer service, information retrieval, and personal assistance. Transfer Learning: This is a technique in NLP where pre-trained models are fine-tuned on specific tasks or domains. Transfer learning has been shown to be highly effective in NLP, allowing models to leverage large amounts of pre-existing knowledge and adapt to new tasks with minimal data.

In order to provide a robust NLP, training of the model is required. Training data is the input that is used to train NLP models. It typically consists of large amounts of text data, along with labels or annotations that indicate the desired output for each input. The quality and quantity of training data are critical factors in determining the performance of NLP models. There are several types of training data commonly used in NLP: Annotated Data: This is training data that has been manually labeled or annotated by human experts. For example, a dataset of product reviews might be annotated with sentiment labels (positive, negative, neutral) to train a sentiment analysis model; Synthetic Data: This is training data that is generated artificially, often using algorithms or templates. Synthetic data can be useful for tasks where annotated data is scarce or expensive to obtain. For example, a synthetic dataset of dialogues might be generated to train a chatbot model; Unsupervised Data: This is training data that does not have any associated labels or annotations. Unsupervised data can be used to train models for tasks such as clustering, topic modeling, and word embedding; Pre-trained Models: These are NLP models that have been pre-trained on large amounts of text data, often using unsupervised learning techniques. Pre-trained models can be fine-tuned on specific tasks or domains using transfer learning; Data Augmentation: This is a technique used to artificially increase the size and diversity of training data by applying transformations such as synonym replacement, insertion, deletion, and substitution. Data augmentation can help improve the robustness and generalization of NLP models; Data Balancing: This is a technique used to address class imbalance in annotated datasets. Class imbalance occurs when one class has significantly more examples than another class, leading to bias in the model. Data balancing techniques include oversampling, undersampling, and SMOTE (Synthetic Minority Over-sampling Technique); Data Cleaning: This is a preprocessing step used to remove noise and inconsistencies from training data. Data cleaning involves techniques such as spelling correction, punctuation normalization, and stopword removal; Data Splitting: This is the process of dividing the training data into separate sets for training, validation, and testing. The training set is used to train the model, the validation set is used to tune hyperparameters and prevent overfitting, and the test set is used to evaluate the final performance of the model.

For use cases or use situations which may arise in a method according to the invention and which are not explicitly described herein, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features and feature combinations of the invention are obtained from the figure and their description as well as the claims. In particular, further implementations of the invention may not necessarily contain all features of one of the claims. Further implementations of the invention may comprise features or combinations of features, which are not recited in the claims.

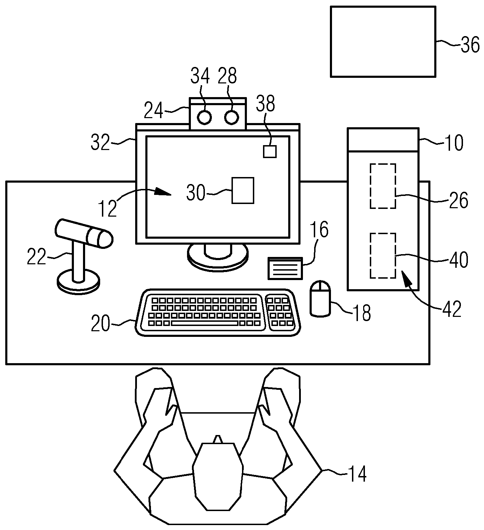

Therefore, the only Fig. 1 shows a schematic view according to an embodiment of the electronic computing device for performing an embodiment according to a method.

In the figure, the same elements are comprising the same reference signs.

Fig. 1 shows a schematic view according to an embodiment of an electronic computing device 10. The electronic computing device 10 is for providing a training simulation 12 for a person 14. The electronic computing device 10 may comprise at least one identification device 16, 28 one input device 18, 20, 22 and one storing device 26.

Furthermore, the electronic computing device 10 may comprise for example a camera 28 as a capturing device, wherein a gesture and/or a mimic of the person 14 may be captured and analyzed for solving a task 30.

Fig. 1 shows that a first input device 18 may be a mouse. A second input device 20 may be, for example, a keyboard. A third input device 22 may be, for example, a microphone. The identification device 16, 28 may comprise, for example, the camera 28 or a card reader 16. Furthermore, the electronic computing device 10 may comprise a display device 32 as well as a speaker device 34.

Fig. 2 further shows a backend 36. For example, the analyzation as well as the training 26 itself may be provided by the external electronic computing device, in particular the backend 36.

According to the shown embodiment, the training simulation 12 for the person 14 is provided. The person 14 is identified by an identification device 16, 28. A task 30 to be solved by the person 14 out of a plurality of stored tasks is selected depending on the identified person 14 by the electronic computing device 10. An input from the person 14 is received for solving the task 30 by an input device 18, 20, 22 of the electronic computing device 10. The received input is analyzed depending on the selected task 30 by the electronic computing device 10. A score value 38 is generated for the person 14 depending on the analyzation by the electronic computing device 10, and the score value 38 is linked to the identified person 14 and stored in the storing device 26 of the electronic computing device 10.

The score value 38 may be presented for the person 14 by an output device 24, for example the speaker device 34. Furthermore, the person 14 is identified by the card reader 16 as the identification device 16, 28 and/or by a camera 28 as the identification device 16, 28.

According to another embodiment, additionally depending on the stored score value 38 of the identified person 14, the task 30 to be solved is a task 30 for training soft skills of the person 14. In particular, the higher the stored score 38 is, the more complex the task 30 for training the soft skill is selected. Furthermore, depending on the stored score 38 of the person 14 a background noise during the training simulation 12 is adapted.

Furthermore, the training for soft skills is divided into a plurality of sub tasks, wherein a subtask is the task 30 to be solved.

Furthermore, the electronic computing device 10 may comprise an artificial intelligence 40 for at least analyzing the received input. The artificial intelligence 40 may be, in particular, a so-called large language model 42. The large language model 42 is trained for role playing with persons.

In particular, Fig. 1 shows a full set of training simulations 12, which are also be regarded as serious games, which cover all aspects of negotiations. The serious games are provides as the tasks 30 to be solved. Each task 30 spans only one small aspect to focus on. In the different negotiation simulations identification methods are incorporated. For example, the score value calculation is a numeric value to measure progress in a consecutive, very visible and easy way that can be used with leaderboards. Furthermore, monetization for more student motivation to stay in the training and for the possibility to monitor the return of investment (ROI) and key performance indicators (KPI) for companies applying the approach to train their employees is provided. Multiple dimensions for leveling-up for more motivation and easy upskilling is provided, these dimensions are also involved to raise the diversity within each task 30 that allow to train one skill by one task 30 in different ways/scenarios. Anonymization to cover uncertainties to train situations closer to the real life is provided, and to make the diversity within the task 30 near to endless. A customization and extendibility by the person 14 to improve the persons experience allowing the person 14 to define their own situations.

Therefore, Fig. 1 shows that the electronic computing device 10 is configured for training practical soft skills. At least two different levels of scope can be distinguished, in particular performance and empathy with the possibility to extend it even to a higher number of score types. Furthermore, two different types for monetization are provided, for example, a public usage with real currency or company internal usage with virtual budget and KPI calculation making these tasks 30 attractive for businesses. Different dimensions for leveling up and diversity within individual small and simple games are provided. The tasks 30 can be extended with user specific emotion definitions which can be very useful, in particular to cover cultural differences in negotiation styles.

The implementation of each task 30 may consider easy and conscious extendibility. Possibilities to cover are, for example, that the person 14 may upload own files with lists. An emotion definition, body language definition, appropriate phrases, inappropriate phrases, example of images/videos/voices and furthermore. Emotion definition can be performed with the help of so-called FACS (Facial Action Code Systems), a standard within the psychological research; AER (Acoustic Emotion Recognition), a definition of some body postures to be recognized by computer vision algorithm and typical verbal patterns. User specific elements or element lists, for example, for premium users, which may want to extend the tasks 30 with their own inputs from the negotiation situations are provided

Furthermore, anonymization can be provided. An avatar outer appearance and personality traits, for example, easy to generate with large language models, and back story, for example, also easy to generate with large language models, can be adapted. Personality traits can be defined as random combinations of types from different existing personality classification models. For example, Meyer-Briggs-Type-Indicator (16 Types), Kersey Temperament Sorter (4 Types), Four Main Temperaments (sanguine, choleric, melancholic, phlegmatic), Enneagram (9 Types), DiSC (four main and four intermediate types), Big Five (complex combinations of five characteristics with different levels), Hartman Color Code (Four Types), Zodiac Signs (12 types). Therefore, random combinations out of more than 16 x 4 x 4 x 9 x 8 x 12 x 5 possible personality combinations are provided. Also, the situation context can be randomized. Also backgrounds can be randomized, for example, images can be generated with generative artificial intelligence just before the task 30 starts or obtained from third party repositories.

Furthermore, distraction, for example, noises can be taken randomly from a noise library. Different types of attraction addresses different gamer and personality types making the tasks 30 attractive for most of the users and thus, effective continuous training. For example, visual attraction, diversity of situations, mental challenges for intellectual motivation, personalization, adaptivity, performance challenges, socializing, natural conversation, emotionality, realism, creativity, physical activity, curiosity, and mastery may be adapted.

In the following, some examples of small and simple digital training simulations 12 are proposed to demonstrate the concept presented above.

A first example may be that the person 14 should make the correct first impression. The person 14 should talk to the counterpart in an appropriate manner. This task 30 is for focusing on making the correct first impression and establishing rapport with the counterparts. Alternatively, the person 14 is given a set of response options to choose from. These options may vary in tone, wording, and approach. The person 14 must carefully select the response that they believe would create the best first impression on the specific client they are dealing with. The electronic computing device 10/system therefore may give short instructions, for example, the avatar's personality and preferences are randomized for each play through, providing a dynamic and diverse experience. For example, "you talk to a boss from a parallel department who does not know you. You want to have a cooperation with this department. Start conversation." The system may show an avatar corresponding to the settings that may show some emotions, for example, as an optional implementation. The person 14 has a little time for the preparation. Then, the person 14 may speak before the camera 28. The system may recognize posture, body language, cloth color, facial expressions, voice tone and pitch, confidence level, phrases used. The more facts suit to the situation, the higher the score is going. The system may calculate positive effects. The training simulation 12 evaluates the person's chosen responses based on various factors such as tone, word choice, empathy and understanding of the client's needs. Each response is assigned to a score. As the person 14 progresses through the task 30, the person 14 may unlock new "levels" that feature more complex negotiation scenarios and challenging counterparts.

Another example may be that the person 14 should talk to the avatar and try to recognize and remember as many facts about the avatar as possible, recognize the current feeling this counterpart may have, for example, tired, bored, lazy, and enthusiastic. After 5 to 10 minutes of talk, for example, 10 questions to be answered by the person 14 about the avatar are provided. The system may generate a random avatar personality. The avatar may have a unique personality, interests and feelings for the person 14 to discover. The system may generate a random context of the talk settings, in particular depending on situation, location, relationship, and give this information to the person 14. The person 14 may ask the avatar several questions in an appropriate manner corresponding to the situation setting, for example, friendly, chatty or formal. The avatar may answer the questions or chat freely corresponding his personally settings generated at the beginning of the training simulation 12. During the conversation, the person 14 must pay close attention to the avatar's words, body language and tone to deduce their interests and emotions. After the conversation, the avatar is hidden from view, and the person 14 is presented with a set of questions about the avatar's details, preferences and current emotions. For example, a shirt color, favored pet, favored food/restaurant, children, temperament may be asked. The person's score is calculated based on the number of correctly answered question. Each correct answer earns points, and incorrect or missed answers result in deductions. Each answer is evaluated by the system, how close the answer is to the avatar's personally generated and real answers given. The score value 38 is calculated, for example, in percentage. As the person 14 progresses, the person 14 unlocks higher levels with more complex avatar personalities and deeper conversational context. The avatar may have nuanced emotions and non-standard interests, the personality traits relevant for the negotiation change to more difficult levels, for example, becoming less talkative, more tending to lie or bluff, less open, more introvert or furthermore.

Another training simulation 12 may have the goal to sharpen negotiation skills by recognizing and identifying various negotiation tactics that the avatar may apply during a conversation. The person 14 has to pay close attention to the words, actions, and intentions of the avatar. During, for example, a ten minute talk with the avatar, occasionally the timer should be stopped by the person 14 if the person 14 notices a tactic applied by the avatar. The person 14 should name the tactic and get the score, for example, shown how close the guess is, or loose points, if too far away from the reality. For example, the system may generate a random avatar personality with unique character traits at negotiation style. The system may generate a random of the negotiation settings, for example, situation, location, relationship between the avatar and the person 14, and give this information to the person 14. The person 14 may talk to the avatar in a simulated negotiation session corresponding to the settings. The avatar may utilize various negotiation tactics during a 10 minute conversation, for example, the avatar may say "I really need this deal to go through quickly. There are other interested parties waiting". During the conversation, the person 14 must be attentive and stop the timer when the person 14 notices a specific tactic being used by the avatar. For example, "this is our final offer, we have other options on the table if you are not interested". The person 14 may stop the timer recognizing the tactic. After stopping the timer, the person 14 must correctly identify and name the tactic used by the avatar, for example, the so-called artificial deadline. The score value 38 is calculated based on the ability to correctly spot and name the negotiation tactics. Each correct identification earns points, and the accuracy and speed in recognizing the tactics contribute to their overall score. Additionally, the task 30 might offer hints or deductions based on the person's performance, encouraging precision in tactic spotting. As the person 14 progresses through the training simulation 12, the person 14 gets more advanced avatars who employ a wider range of negotiation tactics, more tactics will be applied during negotiation or complex/seldom ones.

Another example may be the so-called emotion express, where the goal is to improve the emotional understanding by accurately expressing various emotions through facial expressions and body language. The mastery in recognition and conveying emotions have to be shown as the person 14 may progress through the training simulation 12. The system may display the name of an emotion or feeling on the screen, for example, happiness, anger, or surprise. The person 14 must make the corresponding facial expression in front of the camera 28 and, optionally, incorporate an appropriate body language to convey the emotion accurately. For example, sadness, the person's 14 response by making a facial expression that reflects sadness, such as dropping the mouth and lowering their eyebrows. The system utilizes facial action coding system analyzes to measure the player's facial expression accuracy. It calculates how well the person 14 replicates the specific face actions associated with the displayed emotion. The system adds the score corresponding to the level of precision, for example, if all face actions are shown, and how intensively. The person 14 may take a photo with an emotion during this training simulation 12, and a camera 28 loads it automatically into the system. The user may include body language, for example, if appropriate for the camera 28. The person's score is based on the level of correspondence between the expressions and face actions associated with the given emotion. The more precise the facial expressions and body language are aligned with the emotion, the higher their score is. As the person 14 progresses through the emotion expression, a broader range of emotions and more complex expressions may be provided. Higher levels challenge the person 14 to recognize and convey subtle emotional nuances effectively.

Another training simulation 12 may be the so-called mirror master, wherein the goal is to enhance the negotiation skills my mastering the art of mirroring. The task 30 is to replicate the avatar's movements and gestures as accurately as possible, improving the ability to build and rapport and establish connections with counterparts through non-verbal communication. The avatar may perform a series of movements and gestures starting with simple actions and progressing to more complex or subtle ones. The person 14 must repeat the avatar's movements in real-time using its body and gestures in front of the camera 28. The person's camera captures the actions, for example, the avatar performs a nodding motion, the person 14 mirrors the nodding in response. The system analyzes the person's movements and compares them to the avatar's actions. It calculates how closely the player's postures and gestures mirror those of the avatar. Throughout the mirroring session, the avatar may also say short phrases or provide key information. The person 14 must pay attention and remember what the avatar says to respond appropriately during the task 30. The person's score is calculated based on the accuracy of the mirroring compared to the avatar's movements. The more closely the person 14 replicates the avatar's actions, the higher the score. The score is calculated in percentage. Additionally, the training simulation 12 takes into account the person's ability to notice important information from the avatar's speech, providing bonus points for correctly recalled key details after the mirroring session. As the person 14 progresses, the person 14 encounters avatars with more diverse and challenging movements and phrases. The training simulation 12 slowly increases in difficulty, challenging the person's mirroring and memory skills. Initial levels do not include fact memorizing, only movement/gesture mirroring. Higher levels may include further distractions in addition to the avatar's speech, for example, background change, or other noises.

Another example may be the negotiator, where the goal is to enhance the negotiation skills by accurately recognizing the negotiation style of the counterpart. The ability to identify various negotiation styles is tested through questionnaires and real-life avatar interactions, and becoming a skilled negotiator capable of adapting to different scenarios is the goal. Furthermore, the person 14 should become aware of its own dominant style. In level 1, the system/avatar presents the person 14 a series of, for example, 25 statements designed to assess the personal style, for example, from the so-called Knauer training. The person 14 reflects his/her agreement to those statements with rather yes- rather no-answers. For example, "a bird in the hand is worth two in the bush", and the system calculates the person's negotiation style. After that the person 14 tries to guess which negotiation type he has shown with his answer. The system compares with the calculated one and gives points for the correct guess. At the next advanced levels, the system may generate a random distribution of the yes-no avatar's answers to the same 25 statements from the level 1 and a random avatar that tells about himself exposing the generated answers to the person 14. The person 14 must recognize the negotiation style, corresponding to those statements. The system compares with the calculated one and gives points for the correct guess. If the person 14 guesses correctly before 25 questions, additional bonus points were earned. Incorrect guesses result in point deductions. In subsequent master levels, the system may generate a random avatar with one of the negotiation style, for example assertive, avoidant, compliant, compromising, collaborative. In the master levels, the avatar may tell the person 14 about himself, answering randomly generated questions about his personal preferences. The avatar's responses may be based on their assigned negotiation style, for example, "yes, I believe in win-win-strategies to achieve mutual benefits in negotiations". During the avatar's interaction, the person 14 has the option to stop the timer and guess the negotiation style the person 14 is portraying. If the person 14 guesses correctly before, for example, 25 questions, the person 14 earns additional bonus points. Incorrect guesses result in point deductions. Another questionnaire can be used from a different source without yes/no, but different styles of questions in a higher level. The person's score is calculated based on the ability to recognize the avatar's negotiation style accurately. Correct guesses and early responses contribute to the person's score, while incorrect answers result in deductions. As the person 14 progresses, the avatar interactions become more challenging, with new and sophisticated questions, for example from further sources of testing, probably randomly generated by the system, and subtle response or statements from the avatar. At the more advanced levels, also avatar's emotional states can be considered by the person 14.

Another example may be the emotional detective, wherein the goal is to improve emotional recognition skills by accurately identifying the emotions and feelings displayed by the avatar. The person 14 should quickly select the correct emotion from the options provided to earn more points within the limited time slot. The avatar will show emotions on their face, possibly accompanied by body language, to express various feelings, for example the avatar displays a broad smile along with open body language, indicating happiness. At the same time, the system displays four options to select, for example, happiness, sadness, surprise, disgust. The person 14 must rapidly select the correct emotion from the proposed list of four options, accurately identifying the emotion shown by the avatar. The person 14 has a limited time to make its selection adding an element of urgency to the task 30. The person 14 must collect as many correct answers as possible in, for example, one to five minutes. The avatar may also say something during the emotion showing. The person's score is based on the number of correct emotions identified within the given time frame. Each accurate selection earns points, encouraging the person 14 to be quick and precise in their response. Wrong answers deduce the total score. In a first level, basic emotions, clearly shown are provide. As the person 14 progresses, the training simulation 12 presents more challenging emotions and feelings to identify. The avatars may exhibit subtle or complex emotions, making it increasingly difficult to recognize the correct emotion accurately. Additionally, at higher levels, the number of options to choose from increase from 4 to 6 or 8 requiring more carefully observations and emotional recognition skills. Higher levels may show complex emotions with different outer appearance of avatars, for example, different ages, genders, cultures.

Another example may be the listen and repeat training, wherein the goal is to sharpen the active listening skills by accurately repeating and rephrasing sentences spoken by the avatar. As the task 30 progresses, the person 14 may face increasingly complex and challenging phrases, along with distractions and variations to enhance the listening abilities. The system may generate randomly an avatar with a specific personality and voice. The system may generate a random list of sentences to be sent to the avatar. The avatar speaks a phrase, and the person 14 must repeat it as precisely as possible. The person's microphone captures his/her response, for example, "the sun is shining brightly", and the person 14 has to repeat "the sun is shining brightly". The system compares in percentage how precise the person's answer is and advances the score. If the person's reply is far too different from the avatar's one, the score is deduced. As the training advances, the avatar introduces longer phrases, challenging the person 14 to listen more attentively, and the system indicates what is expected. Repetition of phrases or its paraphrasing, for example "the sun is shining brightly", the system displays "paraphrase", the person 14 has to respond "it's a nice weather". To test the person's focus, the avatar introduces distractions, background noise, changes in voice pitch, or accents, requiring the person 14 to stay attentive and recognize the core phrase accurately. The person's score is calculated based on the accuracy of the phrase repetition and rephrasing. Each precise repetition and successful rephrasing earn points in the amount of percentage of correspondence to the original phrase. As the person 14 progresses, the task 30 increases in difficulty, with longer and more complex phrases, distractions, and diverse variations. Also background may change to introduce a different type of distraction, for example, adding moving elements.

Another example may the so-called body language master, wherein the goal is to develop the emotion recognition skills by interpreting the avatar's body language and gestures. The most suitable phrase that corresponds to the expressed feeling should be selected, and optionally provide a proposal to test the emotional intelligence further is provided. The avatar displays various body postures and gestures, indicating different emotions and feelings. For example, the avatar crosses their arms and looks away, suggesting defensiveness or discomfort, and the system displays several options to choose from. The person 14 must quickly choose the most suitable phrases from a list of, for example, four to six options that correspond to the emotion exposed by the avatar's body language, for example, defensiveness, discomfort, confidence, relaxation. For an added challenge, no options are proposed by the system, the person 14 shall type in the person's own proposal for a phrase that he believes best describes the avatar's emotional state based on the body language. The system compares the correspondence between the person's phrase and avatar feeling. The person 14 has limited time to make its selection, adding an element of urgency to the task 30. The person 14 must collect as many correct answers as possible in, for example, 1 to 5 minutes. The person's score is calculated based on the number of correct emotion recognition and matching phrases. Each accurate selection earns points measured by percentage of the correspondence. As the person 14 advances, the avatar's body language becomes more intricate and nuanced requiring a deeper understanding of non-verbal cues to correctly interpret their emotions. High levels may also introduce more diverse and challenging emotions for the person 14 to recognize. Higher levels have more options to choose from, the most advanced levels do not propose options, but accept text input in form of person's sentences, which make it even more complicated to describe feelings.

Another example may be the so-called conflict resolver, wherein the goal is to improve the conflict resolution skills during negotiation by selecting the best phrase for one participant to continue the conversation. The person 14 has to navigate through various conflict situations and has to choose the most appropriate response to de-escalate tension and reach a mutual beneficial outcome. The system presents the person 14 with pictures, videos, audios, or cartoons depicting different conflict scenarios during negotiation. Each situation involves two or more participants engaged in disagreement, for example the person 14, sees a cartoon showing two business partners arguing over a contract clause. The person 14 must select the best phrase for one indicated participant to respond and continue the negotiation from a list of options. These options may include both inappropriate and good phrases, for example, a) "If you don't agree to do this, I'll take a legal action against you.", b) "Let's take a step back and explore alternative solutions to find common ground.", c) "This is a waste of time. I'am out." Each option carries a different point value based on its appropriateness in resolving the conflict. Inappropriate or aggressive responds, for example, threatening, ambiguous, irrelevant or out of scope, result in negative points, while well-chosen, clear, and polite phrases earn positive points. A person's score is calculated based on the total points earned from their selected phrases through the game. Each option has its own value of points depending on how appropriate it is for the depicted situation. As the person 14 progresses, the training presents more complex and challenging conflict situations with answering options hardly distinguishable for their effectiveness, demanding a deeper understanding of conflict resolution techniques. High levels may introduce the pressure or limit the number of attempts. The master levels may require from the person 14 to enter his own phrases without options from the system.

### List of Reference

- 10: electronic computing device
- 12: training simulation
- 14: person
- 16: card reader
- 18: mouse
- 20: keyboard
- 22: microphonse
- 24: output device
- 26: storing device
- 28: camera
- 30: task
- 32: display device
- 34: speaker
- 36: backend
- 38: score value
- 40: artificial intelligence
- 42: large language model

## Claims

1. A method for providing a training simulation (1) for a person (14) by an electronic computing device (10), comprising the steps of:
- identifying the person (14) by an identification device (16, 28) of the electronic computing device (10);
- selecting a task (30) to be solved by the person (14) out of a plurality of stored tasks (30) depending on the identified person (14) by the electronic computing device (10);
- receiving an input from the person (14) for solving the task by an input device (18, 20, 22, 28) of the electronic computing device (10);
- analyzing the received input depending on the selected task (30) by the electronic computing device (10);
- generating a score value (38) for the person (14) depending on the analyzation by the electronic computing device (10); and
- storing the score value (38) linked to the identified person (14) in a storing device (26) of the electronic computing device (10).

2. A method according to claim 1, **characterized in that**
the score value (38) is presented for the person (14) by an output device (32, 34) of the electronic computing device (10).

3. A method according to claim 1 or 2, **characterized in that**
the person (14) is identified by a card reader (16) as the identifying device (16, 28) and/or by a camera (28) as the identifying device (16, 28).

4. A method according to any one of claims 1 to 3, **characterized in that**
additionally depending on a stored score value (38) of the identified person (14) the task (30) to be solved is selected.

5. A method according to any one of claims 1 to 4, **characterized in that**
the task (30) to be solved is a task (30) for training soft skills of the person (14).

6. A method according to claim 5, **characterized in that**
the higher the stored score is the more complex the task (30) for training the soft skill is selected.

7. A method according to claim 6, **characterized in that**
depending on the stored score of the person (14) a background distraction during the training simulation (12) is adapted.

8. A method according to any one of claims 5 to 7, **characterized in that**
the training for a soft skill is divided in a plurality of sub tasks, wherein a sub task is the task (30) to be solved.

9. A method according to any one of claims 1 to 8, **characterized in that**
the electronic computing device (10) comprises an artificial intelligence (40) for at least analyzing the received input.

10. A method according to claim 9, **characterized in that**
the artificial intelligence (40) is provided as a large language model (42).

11. A method according to 10, **characterized in that**
the large language model (42) is trained for role playing with persons.

12. A method according to any one of claims 1 to 11, **characterized in that**
the electronic computing device (10) comprises a capturing device, wherein a gesture and/or a mimic of the person (14) is captured and analyzed for solving the task (30).

13. A computer program product comprising program code means for performing a method according to any one of the claims 1 to 12.

14. A computer-readable storage medium comprising at least the computer program product according to claim 13.

15. An electronic computing device (10) for providing a training simulation (12) for a person (14), comprising at least one identification device (16, 28), one input device (18, 20, 22, 28), and one storing device (26), wherein the electronic computing device (10) is configured for performing a method according to any one of claims 1 to 12.
